# EUROPÄISCHE PATENTSCHRIFT

(11) **EP 3 232 166 B1**
(45) Veröffentlichungstag und Bekanntmachung des Hinweises auf die Patenterteilung: **26.09.2018**
(21) Anmeldenummer: 17158605.0
(22) Anmeldetag: 01.03.2017
(51) Int. Cl.: G01D 11/24, G01D 11/30

(54) **SENSORGEHÄUSE**
SENSOR CASING
BOITIER DE CAPTEUR

(30) Priorität: 11.04.2016 DE 102016106583
(43) Veröffentlichungstag der Anmeldung: 18.10.2017
(73) Patentinhaber: Sick AG, 79183 Waldkirch (DE)
(72) Erfinder: Dorer, Armin, 78120 Furtwangen (DE)

(56) Entgegenhaltungen:
- EP-A1- 2 372 168
- EP-A1- 2 940 433
- EP-A2- 2 447 546
- DE-A1- 19 953 186
- DE-U1- 29 812 609

## Beschreibung

Die vorliegende Erfindung betrifft ein Sensorgehäuse mit einem Sensor, wobei das Sensorgehäuse in einer Befestigungsnut eines Befestigungskörpers befestigt wird.

Eine Montage bzw. eine Befestigung von Sensorgehäusen bzw. Sensoren an Pneumatikzylindern erfolgt größtenteils in herstellerspezifischen Nuten, welche durch viele Varianten und deren Toleranzen große Anforderungen an eine Flexibilität einer solchen Befestigung stellen. Gerade bei C-Nuten in Kombination mit einer direkten Montage des Sensors von oben in die Befestigungsnut, was auch als Drop-In bezeichnet wird, ist eine sichere Befestigung wegen des runden Hinterschnitts und den unterschiedlichen Abmessungen von unterschiedlichen C-Nuten nicht immer gegeben.

Befestigungen von Drop-In montierbaren Sensoren nutzen meist die besonders ausgebildete Kontur des Sensorgehäuses, um sich an der Nutschulter abzustützen. Oft wird der Sensor gekippt bzw. gedreht von oben in die Nut eingeführt und dann in die gewünschte Position zurückgekippt bzw. zurückgedreht. Danach wird durch eine Schraube, welche sich am Nutboden abstützt, das Sensorgehäuse nach oben gegen die Nutschulter der C-Nut gedrückt. Die Kontur des Sensorgehäuses verhindert, dass der Sensor aus der Nut herausgedrückt wird.

Andere Befestigungen sind Exzenter, die sich an der Nutschulter einspannen, Linsenkopfschrauben, Spannbacken oder Nutensteine, die sich unter die Nutschulter drücken.

Solche Befestigungen sind meist aufwändig und damit teuer und benötigen meist viel Bauraum, wodurch das Sensorgehäuse unnötig vergrößert wird, beispielsweise durch Spannbacken und Nutensteine. Weiter nachteilig ist, dass der Sensor bzw. das Sensorgehäuse vom Nutboden weggedrückt wird, wodurch sich ein Abstand zwischen Sensor und beispielsweise einem Gebermagnet unnötig vergrößert.

Weitere kritische Merkmale einer Befestigung sind der Montageaufwand, die Verlierbarkeit der Befestigung des Sensorgehäuses, benötigter Bauraum für die Befestigung und die Kosten eines solchen Sensors bzw. Sensorgehäuses.

Die DE 298 11 811 U1 offenbart eine Vorrichtung zur lösbaren Verankerung eines Sensors in einer längsseits offenen Verankerungsnut eines Bauteils, mit einer mit dem Sensor verbundenen Klemmeinrichtung, die ein drehbewegliches Klemmteil aufweist, das bei in die Verankerungsnut eingesetztem Sensor durch Verdrehen in eine Klemmstellung verbringbar ist, in der es mit der Innenfläche der Verankerungsnut verspannt ist, wobei das Klemmteil so ausgeführt ist, dass es zum Erhalt der Klemmstellung ausschließlich zwischen sich gegenüberliegenden Seitenflächen der Verankerungsnut verspannbar ist.

Die DE 94 14 869 U1 offenbart eine Vorrichtung zur lösbaren Verankerung eines Sensors in einer Verankerungsnut, wobei die Verankerungsnut einen durch sich gegenüberliegende Längsvorsprünge begrenzten Nuthals und einen in Tiefenrichtung an den Nuthals anschließenden breiteren Verankerungsabschnitt aufweist, mit einer mit dem Sensor verbundenen Klemmeinrichtung, die ein Klemmteil aufweist, das bei verankertem Sensor eine Klemmstellung einnimmt, in der es in die Verankerungsnut eingreift und mit der Innenfläche der Verankerungsnut verspannt ist, dadurch gekennzeichnet, dass das Klemmteil zwischen einer das Einsetzen in die Verankerungsnut durch den Nuthals hindurch ermöglichenden Einsetzstellung und der Klemmstellung bewegbar ist und dass zusätzlich zu der Klemmeinrichtung mit Abstand zu dieser eine Verrastungseinrichtung vorgesehen ist, die mindestens eine Rastnase aufweist, die bei verankertem Sensor in dem Verankerungsabschnitt der Verankerungsnut unter Einnahme einer Raststellung einen der Längsvorsprünge hintergreift, und die entgegen einer Rückstellkraft aus der Raststellung in eine Durchtrittsstellung bewegbar ist, in der ihr Durchtritt durch den Nuthals möglich ist.

Die EP 2 940 433 A1 offenbart einen Sensor mit einem Sensorgehäuse, wobei ein Klemmkörper zwei Spannbacken aufweist.

Die DE 199 53 186 A1 offenbart einen Zylinderschalter mit einer Befestigungseinrichtung mit zwei spreizbaren Federzungen.

Die EP 2 447 546 A2 offenbart eine Sensoranordnung mit einem Sensorgehäuse das zur Aufnahme in einer nutartigen Vertiefung einer Funktionseinheit ausgebildet ist.

Die EP 2 372 168 A1 offenbart eine Anordnung zum axial verstellbaren Festlegen eines zylindrischen Sensors innerhalb einer Nut, wobei ein Feststellelement aus Blech vorgesehen ist.

Eine Aufgabe der Erfindung besteht darin, eine einfachere Befestigung eines Sensorgehäuses für beliebige Nutgeometrien, insbesondere für eine C-Nut bereitzustellen.

Die Aufgabe wird gemäß Anspruch 1 gelöst durch ein Sensorgehäuse mit einem Sensor, wobei das Sensorgehäuse oder ein Teil des Sensorgehäuses in eine Befestigungsnut eines metallischen Befestigungskörpers ragt zur Befestigung des Sensorgehäuses, wobei in dem Sensorgehäuse mindestens ein metallischer Klemmkörper vorgesehen ist, wobei das Sensorgehäuse ein Betätigungselement zur Drehung des Klemmkörpers aufweist, wobei eine Drehachse für den Klemmkörper parallel zu einer Längsachse der Befestigungsnut liegt.

Bei dem Sensor 1 handelt es sich bevorzugt um einen magnetischen Sensor, insbesondere um einen magnetischen Positions- oder Wegesensor. Jedoch kann der Sensor auch ein kapazitiver, optischer oder induktiver Sensor sein.

Gemäß der Erfindung ist die Drehachse des Klemmkörpers parallel zu der Längsrichtung der Befestigungsnut. Dadurch ist es möglich, dass der Klemmkörper von einer Seite durch das Betätigungselement betätigt werden kann und durch die drehbare Lagerung an dem anderen Ende des Klemmkörpers gegen die Nutwand drücken kann. Dabei ist es möglich, dass der Klemmkörper seitlich gegen die Nutwand drückt und den Sensor gegen den Nutgrund bzw. Nutboden drückt. Dadurch ist ein minimaler Abstand zwischen Sensor bzw. den Sensorelementen und dem Nutgrund gewährleistet, was beispielsweise bei einer Detektion eines Gebermagneten einer Kolben-/Zylinderanordnung zu verbesserten Messergebnissen führt.

Die Befestigung des Sensorgehäuses kommt quasi mit wenigstens zwei beweglichen Bauteilen aus, nämlich dem Betätigungselement und dem Klemmkörper. Dadurch ist der Sensor sehr preiswert herstellbar. Weiter ist dadurch das Sensorgehäuse sehr kompakt herstellbar, da die Bauteile wenig Bauraum beanspruchen.

Da lediglich das Betätigungselement betätigt werden muss, ist eine sehr schnelle, einfache und sichere Montage des Sensorgehäuses in der Befestigungsnut möglich. Der Sensor kann dabei in unterschiedlich ausgebildeten Befestigungsnuten befestigt werden. Beispielsweise kann der Sensor in einer T-Nut oder besonderes bevorzugt in einer C-Nut befestigt werden.

Das Sensorgehäuse kann mehrfach in einer Befestigungsnut montiert werden, ohne dass sich die Haltekraft verschlechtert. Der Sensor kann beispielsweise eine Breite in Richtung der Nutbreite von beispielsweise 7 mm aufweisen. Jedoch sind auch noch kleinere Breiten möglich.

Das Befestigungselement kann beispielsweise als Stanzteil hergestellt sein, wodurch das Befestigungselement besonders preiswert herstellbar ist.

In Weiterbildung der Erfindung ist eine Austrittsöffnung des Klemmkörpers seitlich an dem Sensorgehäuse angeordnet. Dadurch ist der Klemmkörper in dem Sensorgehäuse selbst geführt und tritt lediglich durch die Austrittsöffnung aus dem Sensorgehäuse heraus. Dadurch wird eine stabile Führung des Klemmkörpers im Sensorgehäuse gewährleistet.

In einer bevorzugten Ausführungsform ist die Drehachse durch das Sensorgehäuse selbst gebildet. Dadurch kann der Klemmkörper ohne zusätzliche Teile in dem Sensorgehäuse angeordnet werden. Das Sensorgehäuse selbst kann beispielsweise aus Metall oder Kunststoff bestehen. Die Drehachse wird beispielsweise durch einen Wulst am Rand des Sensorgehäuses gebildet. Der Wulst ist dabei parallel zu einer Längsrichtung der Befestigungsnut bzw. quer zu einer Betätigungsrichtung des Betätigungselementes ausgerichtet. Die Drehachse ist damit ebenso quer zu einer Betätigungsrichtung des Betätigungselementes ausgerichtet.

In Weiterbildung der Erfindung ist der Klemmkörper halbkreisförmig ausgebildet. Dadurch kann durch die Form des Klemmkörpers und die Drehachse die Kraft des Betätigungselements in der Richtung umgelenkt werden, so dass der Klemmkörper seitlich gegen die Nutwand drückt, obwohl die Kraft des Betätigungselementes in Richtung des Nutgrundes bzw. Nutbodens gerichtet ist. Durch die halbkreisförmige Form kann der Klemmkörper in dem Sensorgehäuse um die Drehachse herum gleitend angeordnet werden. Das Sensorgehäuse selbst weist hierzu eine halbkreisförmige Aufnahme auf, um den Klemmkörper aufzunehmen, wobei der Klemmkörper um die Drehachse drehbar gelagert ist.

Gemäß einer bevorzugten Ausführung der Erfindung ist das Betätigungselement zur Drehung des Klemmkörpers eine Schraube, insbesondere eine Madenschraube, wobei die Schraube in einem Gewinde des Sensorgehäuses geführt ist, um den Klemmkörper zu betätigen. Durch Eindrehen der Schraube wird die Schraube gegen den Klemmkörper gedrückt, wodurch der Klemmkörper bewegt wird und gegen die Nutwand gedrückt wird. Durch das Gewinde selbst ist die Schraube arretiert, so dass der Klemmkörper sich nicht von selbst zurückbewegen kann. Weiter ist die Schraube selbst durch das Gewinde quasi unverlierbar, da viele Umdrehungen der Schraube notwendig sind, um diese vom Sensorgehäuse zu lösen. Bei der Schraube kann es sich um eine genormte Standardschraube handeln. Zum Lösen des Sensorgehäuses braucht lediglich die Schraube wieder zurückgedreht werden, wodurch sich der Klemmkörper wieder von der Nutwand wegbewegen kann, woraufhin das Sensorgehäuse aus der Befestigungsnut entnommen werden kann. Dadurch wird eine hohe Haltekraft des Sensorgehäuses bereitgestellt bei gleichzeitig geringem Anzugsdrehmoment der Schraube. Die Schraube kann ein ISO-Gewinde aufweisen. Jedoch ist es auch vorgesehen, dass das Gewinde eine höhere Steigung aufweist als ein ISO-Gewinde. Dadurch kann der Sensor beispielsweise mit nur einer Schraubenumdrehung oder weniger befestigt werden. Weiter könnte eine Madenschraube zwei unterschiedliche Durchmesser aufweisen, wobei der Gewindeabschnitt einen geringeren Durchmesser und ein daran anschließender Betätigungsabschnitt einen größeren Durchmesser aufweist, wodurch ein Anschlag für eine begrenzte Einschraubtiefe gebildet wird.

In Weiterbildung der Erfindung weist die Schraube an einem Ende Betätigungsmittel auf und an dem gegenüberliegenden Ende einen Kugelkopf oder eine Kugelkopfaufnahme auf, wobei der Klemmkörper eine zugehörige Kugelkopfaufnahme oder einen zugehörigen Kugelkopf aufweist. Die Betätigungsmittel können beispielsweise durch einen Schlitz, einen Kreuzschlitz und/oder eine Innensechskant oder dergleichen gebildet sein, um ein Betätigungswerkzeug, wie beispielsweise einen Schraubendreher aufzunehmen. Der Kugelkopf und die Kugelkopfaufnahme der Schraube bzw. des Klemmkörpers greifen ineinander, so dass eine bewegliche Verbindung hergestellt ist. Bei Hineindrehen der Schraube mit dem Kugelkopf in das Sensorgehäuse wird der Klemmkörper durch den Kugelkopf nach unten gedrückt. Beim Herausdrehen der Schraube wird der Klemmkörper durch den Kugelkopf wieder nach oben gezogen, wodurch das Sensorgehäuse wieder gelöst wird. Dieses Prinzip gilt natürlich auch für den Fall, dass die Schraube die Kugelkopfaufnahme aufweist und der Klemmkörper den Kugelkopf aufweist.

In Weiterbildung der Erfindung sind mindestens zwei Klemmkörper in dem Sensorgehäuse angeordnet, wobei die Klemmkörper gegenüberliegend angeordnet sind, und die Klemmkörper durch das Betätigungselement jeweils drehbar sind. Die Klemmkörper wirken jeweils auf gegenüberliegende Nutwände. Dadurch wird das Sensorgehäuse noch stabiler in der Befestigungsnut befestigt. Insbesondere bei hohen Temperaturen bzw. hohen Temperaturschwankungen kann das Sensorgehäuse stabil in der Befestigungsnut befestigt werden. Das Sensorgehäuse wird bei einer symmetrischen Nut auch automatisch zentriert in der Befestigungsnut befestigt. Das Befestigungselement wirkt dabei gleichzeitig auf beide Klemmkörper. Auch hier kann an der Schraube ein Kugelkopf angeordnet sein. Die Klemmkörper weisen dann jeweils eine halbkugelförmige Aufnahme auf zur Aufnahme des Kugelkopfes der Schraube.

Gemäß einer bevorzugten Ausführungsform der Erfindung besteht der Klemmkörper aus Metall und der Klemmkörper ist elektrisch mit einem elektrischen Potential des Sensors, bzw. einer Leiterplatte des Sensors verbunden. Der Klemmkörper kann beispielsweise mittels eines Schleifkontaktes mit einem elektrischen Potential verbunden sein. Jedoch kann auch ein Kontakt direkt mit einem metallischen Sensorgehäuse erfolgen, welcher ebenfalls mittels eines Schleifkontaktes realisiert ist. Dadurch, dass das Sensorgehäuse mit einem elektrischen Potential, vorzugsweise einem Massepotential verbunden ist, ist der Sensor robuster gegenüber elektromagnetischen Störungen, wodurch die elektromagnetische Verträglichkeit verbessert wird (EMV).

In Weiterbildung der Erfindung weist der Klemmkörper an der Außenseite, welche gegen die Nutwand der Befestigungsnut drückt, eine Verzahnung auf. Durch die Verzahnung kann sich der Klemmkörper in der Nutwand verkrallen, wodurch das Sensorgehäuse stabiler in der Nutwand gehalten wird.

Die Verzahnung bzw. Struktur ist dabei an der Fläche angeordnet, die an der Nut anliegt. Dadurch kann zwischen der Fläche oder einem Teil der Fläche des Klemmkörpers und der Nutwand eine höhere Reibung realisiert werden, wodurch das Sensorgehäuse bzw. der Sensor sicherer und besser in der Nut befestigt wird. Die Flächen der 'verkrallen' sich damit quasi in der Nutwand.

In Weiterbildung der Erfindung weist der Klemmkörper Blockiermittel auf, wodurch der Klemmkörper unverlierbar im Sensorgehäuse angeordnet ist. Die Blockiermittel können beispielsweise Vorsprünge sein, wodurch der Klemmkörper unverlierbar im Sensorgehäuse gehalten ist.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorgehäuse in einer Befestigungsnut;
- Figur 2: ein Sensorgehäuse in einer Befestigungsnut in einer Schnittdarstellung;
- Figur 3: ein Sensorgehäuse, wobei ein Klemmkörper gegen die Nutwand drückt;
- Figur 4: ein Sensorgehäuse mit einem Betätigungselement mit Kugelkopf;
- Figur 5: ein Sensorgehäuse mit zwei Klemmkörpern.

In den nachfolgenden Figuren sind identische Teile mit identischen Bezugszeichen versehen.

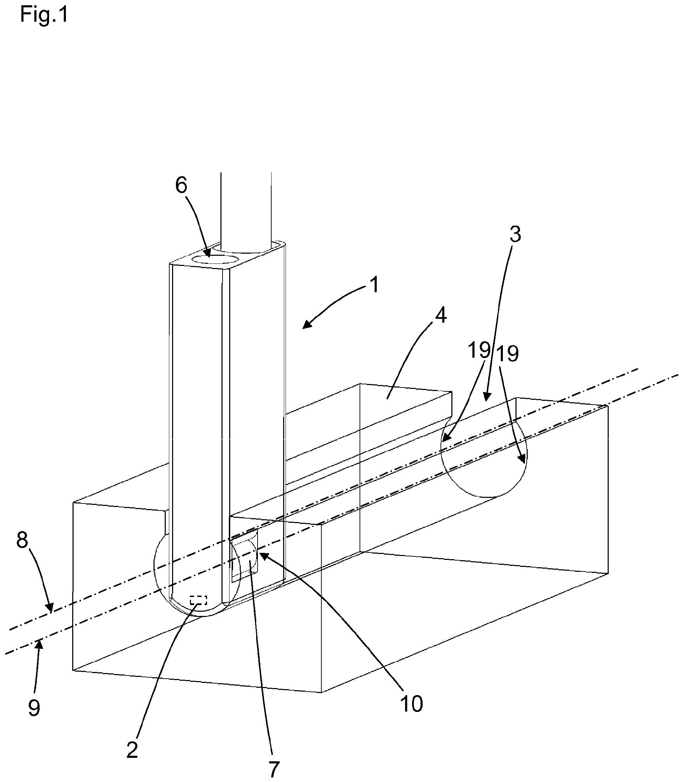

Figur 1 zeigt ein Sensorgehäuse 1 mit einem Sensor 2, wobei das Sensorgehäuse 1 oder ein Teil des Sensorgehäuses in eine Befestigungsnut 3 eines metallischen Befestigungskörpers 4 ragt zur Befestigung des Sensorgehäuses 1, wobei in dem Sensorgehäuse 1 mindestens ein metallischer Klemmkörper 7 vorgesehen ist, wobei das Sensorgehäuse 1 ein Betätigungselement 6 zur Drehung des Klemmkörpers 7 aufweist, wobei eine Drehachse 8 für den Klemmkörper 7 parallel zu einer Längsachse 9 der Befestigungsnut 3 liegt. Der metallische Befestigungskörper 4 ist zur besseren Darstellung quasi transparent dargestellt.

Bei dem Sensor 2 handelt es sich bevorzugt um einen magnetischen Sensor, insbesondere um einen magnetischen Positions- oder Wegesensor.

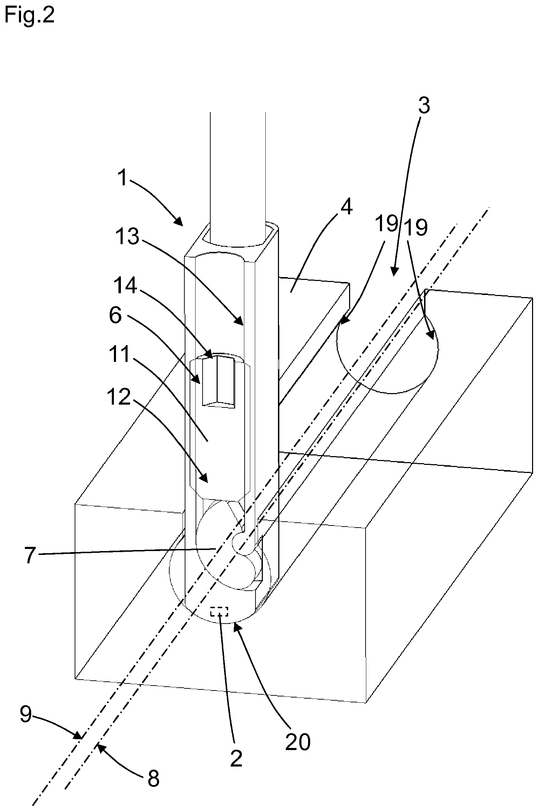

Figur 2 zeigt eine schematische Schnittdarstellung entlang des Betätigungselements 6 gemäß Figur 1. Gemäß Figur 2 ist die Drehachse 8 des Klemmkörpers 7 parallel zu der Längsachse 9 bzw. Längsrichtung der Befestigungsnut 3. Dadurch ist es möglich, dass der Klemmkörper 7 von einer Seite durch das Betätigungselement 6 betätigt werden kann und durch die drehbare Lagerung an dem anderen Ende des Klemmkörpers 5 gegen die Nutwand 19 drücken kann. Dabei ist es möglich, dass der Klemmkörper 7 seitlich gegen die Nutwand 19 drückt und das Sensorgehäuse 1 gegen den Nutgrund 20 bzw. Nutboden 20 drückt.

Das Sensorgehäuse 1 kann dabei in unterschiedlich ausgebildeten Befestigungsnuten 3 befestigt werden. Beispielsweise kann das Sensorgehäuse 1 in einer T-Nut oder besonderes bevorzugt in einer C-Nut wie dargestellt befestigt werden.

Gemäß Figur 1 ist die Austrittsöffnung 10 des Klemmkörpers 7 seitlich an dem Sensorgehäuse 1 angeordnet. Dadurch ist der Klemmkörper 7 in dem Sensorgehäuse 1 selbst geführt und tritt lediglich durch die Austrittsöffnung 10 aus dem Sensorgehäuse 1 heraus.

Gemäß Figur 2 ist die Drehachse 8 durch das Sensorgehäuse 1 selbst gebildet. Dadurch kann der Klemmkörper 7 ohne zusätzliche Teile in dem Sensorgehäuse 1 angeordnet werden. Das Sensorgehäuse 1 selbst kann beispielsweise aus Metall oder Kunststoff bestehen. Die Drehachse 8 wird beispielsweise durch einen Wulst am Rand des Sensorgehäuses 1 gebildet. Der Wulst ist dabei parallel zu einer Längsrichtung der Befestigungsnut 3 bzw. quer zu einer Betätigungsrichtung des Betätigungselementes 6 ausgerichtet. Die Drehachse 8 ist damit ebenso quer zu einer Betätigungsrichtung des Betätigungselementes 6 ausgerichtet.

Gemäß Figur 2 ist der Klemmkörper 7 halbkreisförmig ausgebildet. Dadurch kann durch die Form des Klemmkörpers 7 und die Drehachse 8 die Kraft des Betätigungselements 6 in der Richtung umgelenkt werden, so dass der Klemmkörper 7 seitlich gegen die Nutwand 19 drückt, obwohl die Kraft des Betätigungselementes 6 in Richtung des Nutgrundes bzw. Nutbodens 20 gerichtet ist. Durch die halbkreisförmige Form kann der Klemmkörper 7 in dem Sensorgehäuse 1 um die Drehachse 8 herum gleitend angeordnet werden. Das Sensorgehäuse 1 selbst weist hierzu eine halbkreisförmige Aufnahme auf, um den Klemmkörper 7 aufzunehmen, wobei der Klemmkörper 7 um die Drehachse 8 drehbar gelagert ist.

Gemäß Figur 2 ist das Betätigungselement zur Drehung des Klemmkörpers eine Schraube 11, insbesondere eine Madenschraube 12, wobei die Schraube 11 in einem Gewinde 13 des Sensorgehäuses 1 geführt ist, um den Klemmkörper 7 zu betätigen. Durch Eindrehen der Schraube 11 wird die Schraube 11 gegen den Klemmkörper 7 gedrückt, wodurch der Klemmkörper 7 bewegt wird und gegen die Nutwand 19 gedrückt wird. Durch das Gewinde 13 selbst ist die Schraube 11 quasi arretiert, so dass der Klemmkörper 7 sich nicht von selbst zurückbewegen kann.

Gemäß Figur 2 weist die Schraube 11 an einem Ende Betätigungsmittel 14 auf. Die Betätigungsmittel 14 können beispielsweise durch einen Schlitz, einen Kreuzschlitz und/oder ein Innensechskant oder dergleichen gebildet sein, um ein Betätigungswerkzeug, wie beispielsweise einen Schraubendreher aufzunehmen.

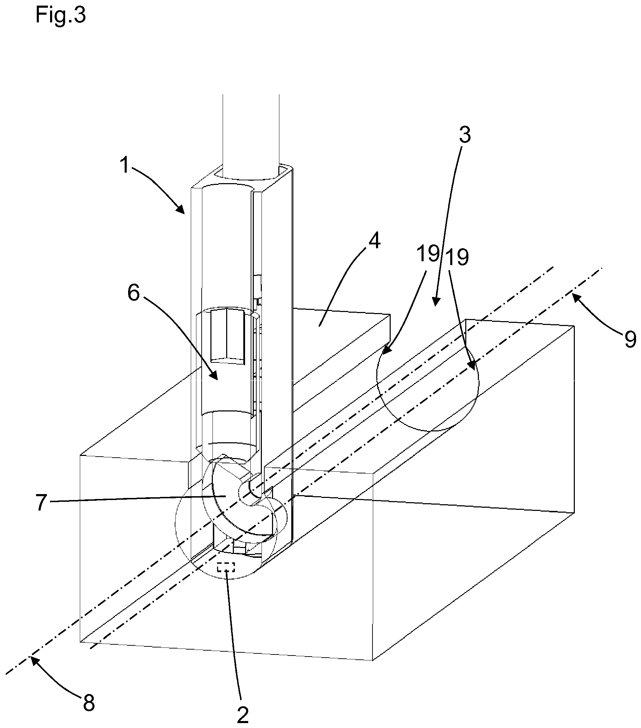

Figur 3 zeigt ebenfalls eine schematische Schnittdarstellung. Figur 3 zeigt das Sensorgehäuse 1, wobei der Klemmkörper 7 gegen die Nutwand 19 gedrückt ist.

Zum Lösen des Sensorgehäuses 1 braucht lediglich die Schraube 11 gemäß Figur 2 wieder zurückgedreht werden, wodurch sich der Klemmkörper 7 wieder von der Nutwand 19 wegbewegen kann, woraufhin das Sensorgehäuse 1 aus der Befestigungsnut 3 entnommen werden kann. Es kann vorgesehen sein, dass das Gewinde 13 eine höhere Steigung aufweist als ein ISO-Gewinde. Dadurch kann das Sensorgehäuse 1 beispielsweise mit nur einer Schraubenumdrehung oder weniger befestigt werden.

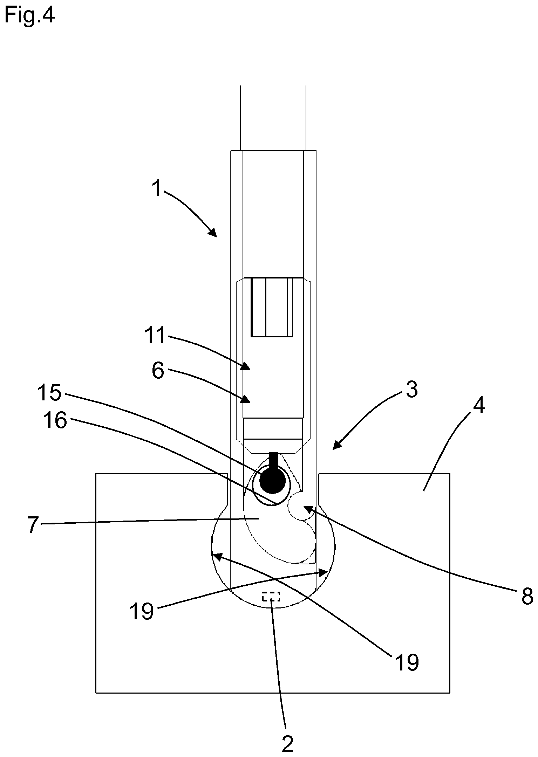

Figur 4 zeigt ebenfalls eine Schnittdarstellung, wobei eine Ansicht auf die Schnittebene dargestellt ist. Gemäß Figur 4 weist die Schraube 11 an dem einen Ende, welches dem Klemmkörper 7 zugewandt ist, einen Kugelkopf 15 auf, wobei der Klemmkörper 7 eine zugehörige Kugelkopfaufnahme 16 aufweist. Der Kugelkopf 15 der Schraube 11 und die Kugelkopfaufnahme 16 des Klemmkörpers 7 greifen ineinander, so dass eine bewegliche Verbindung hergestellt ist. Beim Hineindrehen der Schraube 11 mit dem Kugelkopf 15 in das Sensorgehäuse 1 wird der Klemmkörper 7 durch den Kugelkopf 15 nach unten gedrückt. Beim Herausdrehen der Schraube 11 wird der Klemmkörper 7 durch den Kugelkopf 15 wieder nach oben gezogen, wodurch das Sensorgehäuse 1 wieder gelöst wird.

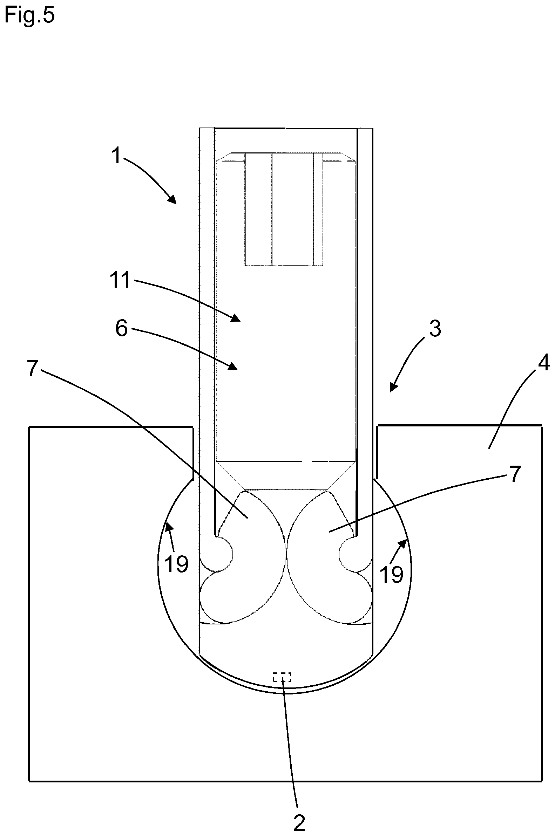

Figur 5 zeigt ebenfalls eine Schnittdarstellung, wobei eine Ansicht auf die Schnittebene dargestellt ist. Gemäß Figur 5 sind zwei Klemmkörper 7 in dem Sensorgehäuse 1 angeordnet, wobei die Klemmkörper 7 gegenüberliegend angeordnet sind, und die Klemmkörper 7 durch das Betätigungselement 6 jeweils drehbar sind. Die Klemmkörper 7 wirken jeweils auf gegenüberliegende Nutwände 19. Das Sensorgehäuse 1 wird bei einer symmetrischen Nut auch automatisch zentriert in der Befestigungsnut 3 befestigt. Das Befestigungselement 6 bzw. die Schraube 11 wirkt dabei gleichzeitig auf beide Klemmkörper 7. Auch hier kann an der Schraube 11 ein Kugelkopf angeordnet sein. Die Klemmkörper 7 weisen dann jeweils eine halbkugelförmige Aufnahme auf, zur Aufnahme des Kugelkopfes der Schraube 11.

Gemäß Figur 1 besteht der Klemmkörper 7 aus Metall und der Klemmkörper 7 ist elektrisch mit einem elektrischen Potential des Sensors 2, bzw. einer Leiterplatte des Sensors 2 verbunden. Der Klemmkörper 7 kann beispielsweise mittels eines Schleifkontaktes mit einem elektrischen Potential verbunden sein.

Gemäß einer nicht dargestellten Ausführungsform weist der Klemmkörper 7 an der Außenseite, welche gegen die Nutwand 19 der Befestigungsnut 3 drückt, eine Verzahnung auf. Durch die Verzahnung kann sich der Klemmkörper 7 in der Nutwand 19 verkrallen, wodurch das Sensorgehäuse 1 stabiler in der Nutwand 19 gehalten wird.

### Bezugszeichen:

- 1: Sensorgehäuse
- 2: Sensor
- 3: Befestigungsnut
- 4: Befestigungskörper
- 6: Betätigungselement
- 7: Klemmkörper
- 8: Drehachse
- 9: Längsachse
- 10: Austrittsöffnung
- 11: Schraube
- 12: Madenschraube
- 13: Gewinde
- 14: Betätigungsmittel
- 15: Kugelkopf
- 16: Kugelkopfaufnahme
- 19: Nutwand
- 20: Nutgrund/Nutboden

## Patentansprüche

1. Sensorgehäuse mit einem Sensor (2), wobei das Sensorgehäuse (1) oder ein Teil des Sensorgehäuses (1) in eine Befestigungsnut (3) eines metallischen Befestigungskörpers (4) ragt zur Befestigung des Sensorgehäuses (1), wobei in dem Sensorgehäuse (1) mindestens ein metallischer Klemmkörper (7) vorgesehen ist, wobei das Sensorgehäuse (1) ein Betätigungselement (6) zur Drehung des Klemmkörpers (7) aufweist,
wobei
eine Drehachse (8) für den Klemmkörper (7) parallel zu einer Längsachse (9) der Befestigungsnut (3) liegt, wenn das Sensorgehäuse (1) in die Befestigungsnut (3) ragt, **dadurch gekennzeichnet, dass**
der Klemmkörper (7) halbkreisförmig ausgebildet ist und in dem Sensorgehäuse (1) um die Drehachse (8) herum gleitend angeordnet ist.

2. Sensorgehäuse nach Anspruch 1, **dadurch gekennzeichnet, dass** eine Austrittsöffnung (10) des Klemmkörpers (7) seitlich an dem Sensorgehäuse (1) angeordnet ist.

3. Sensorgehäuse nach mindestens einem der vorhergehenden Ansprüche, **dadurch gekennzeichnet, dass** die Drehachse (8) durch einen Teil des Sensorgehäuses (1) selbst gebildet ist.

4. Sensorgehäuse nach mindestens einem der vorhergehenden Ansprüche, **dadurch gekennzeichnet, dass** das Betätigungselement (6) zur Drehung des Klemmkörpers (7) eine Schraube (11), insbesondere eine Madenschraube (12) ist, wobei die Schraube (11) in einem Gewinde (13) des Sensorgehäuses (1) geführt ist, um den Klemmkörper (7) zu betätigen.

5. Sensorgehäuse nach Anspruch 4, **dadurch gekennzeichnet, dass** die Schraube (11) an einem Ende Betätigungsmittel (14) aufweist und an dem gegenüberliegenden Ende einen Kugelkopf (15) oder eine Kugelkopfaufnahme (16) aufweist, wobei der Klemmkörper (7) eine zugehörige Kugelkopfaufnahme (16) oder einen zugehörigen Kugelkopf (15) aufweist.

6. Sensorgehäuse nach mindestens einem der vorhergehenden Ansprüche, **dadurch gekennzeichnet, dass** mindestens zwei Klemmkörper (7) in dem Sensorgehäuse (1) angeordnet sind, wobei die Klemmkörper (7) gegenüberliegend angeordnet sind, und die Klemmkörper (7) durch das Betätigungselement (6) jeweils drehbar sind.

7. Sensorgehäuse nach mindestens einem der vorhergehenden Ansprüche, **dadurch gekennzeichnet, dass** der Klemmkörper (7) aus Metall besteht und der Klemmkörper (7) elektrisch mit einem elektrischen Potential des Sensors (2), bzw. einer Leiterplatte des Sensors (2) verbunden ist.

8. Sensorgehäuse nach mindestens einem der vorhergehenden Ansprüche, **dadurch gekennzeichnet, dass** der Klemmkörper (7) an der Außenseite, welche gegen die Nutwand (19) der Befestigungsnut (3) drückt, eine Verzahnung aufweist.

9. Sensorgehäuse nach mindestens einem der vorhergehenden Ansprüche, **dadurch gekennzeichnet, dass** der Klemmkörper (7) Blockiermittel aufweist, wodurch der Klemmkörper (7) unverlierbar im Sensorgehäuse (1) angeordnet ist.

## Claims

1. A sensor housing comprising a sensor (2), wherein the sensor housing (1) or a part of the sensor housing (1) projects into a fastening groove (3) of a metallic fastening body (4) for fastening the sensor housing (1); wherein at least one metallic clamping body (7) is provided in the sensor housing (1), with the sensor housing (1) having an actuation element (6) for rotating the clamping body (7); and
wherein an axis of rotation (8) for the clamping body (7) is disposed in parallel with a longitudinal axis (9) of the fastening groove (3) when the sensor housing (1) projects into the fastening groove (3),
**characterized in that**
the clamping body (7) is semicircular and is arranged in a sliding manner about the axis of rotation (8) in the sensor housing (1).

2. A sensor housing in accordance with claim 1, **characterized in that** an outlet opening (10) of the clamping body (7) is arranged laterally at the sensor housing (1).

3. A sensor housing in accordance with at least one of the preceding claims, **characterized in that** the axis of rotation (8) is formed by a part of the sensor housing (1) itself.

4. A sensor housing in accordance with at least one of the preceding claims, **characterized in that** the actuation element (6) for rotating the clamping body (7) is a screw (11), in particular a grub screw (12), with the screw (11) being guided in a thread (13) of the sensor housing (1) to actuate the clamping body (7).

5. A sensor housing in accordance with claim 4, **characterized in that** the screw (11) has actuation means (14) at one end and has a ball head (15) or a ball head mount (16) at the oppositely disposed end, with the clamping body (7) having an associated ball head mount (16) or an associated ball head (15).

6. A sensor housing in accordance with at least one of the preceding claims, **characterized in that** at least two clamping bodies (7) are arranged in the sensor housing (1), with the clamping bodies (7) being arranged opposite one another and with the clamping bodies (7) being respectively rotatable by the actuation element (6).

7. A sensor housing in accordance with at least one of the preceding claims, **characterized in that** the clamping body (7) comprises metal; and **in that** the clamping body (7) is electrically connected to an electric potential of the sensor (2) or to a circuit board of the sensor (2).

8. A sensor housing in accordance with at least one of the preceding claims, **characterized in that** the clamping body (7) has a toothed arrangement at the outer side that presses against the groove wall (19) of the fastening groove (3).

9. A sensor housing in accordance with at least one of the preceding claims, **characterized in that** the clamping body (7) has blocking means, whereby the clamping body (7) is captively arranged in the sensor housing (1).

## Revendications

1. Boîtier de capteur comportant un capteur (2), dans lequel le boîtier de capteur (1) ou une partie du boîtier de capteur (1) pénètre dans une gorge de fixation (3) d'un corps de fixation métallique (4) pour fixer le boîtier de capteur (1), au moins un corps de serrage métallique (7) est prévu dans le boîtier de capteur (1), le boîtier de capteur (1) comprend un élément d'actionnement (6) pour tourner le corps de serrage (7), un axe de rotation (8) pour le corps de serrage (7) se situe parallèlement à un axe longitudinal (9) de la gorge de fixation (3) lorsque le boîtier de capteur (1) pénètre dans la gorge de fixation (3),
**caractérisé en ce que**
le corps de serrage (7) est réalisé en forme de demi-cercle et est agencé en glissement autour de l'axe de rotation (8) dans le boîtier de capteur (1).

2. Boîtier de capteur selon la revendication 1, **caractérisé en ce que** une ouverture de sortie (10) du corps de serrage (7) est agencée latéralement sur le boîtier de capteur (1).

3. Boîtier de capteur selon l'une au moins des revendications précédentes, **caractérisé en ce que** l'axe de rotation (8) est formé par une partie du boîtier de capteur (1) lui-même.

4. Boîtier de capteur selon l'une au moins des revendications précédentes, **caractérisé en ce que** l'élément d'actionnement (6) pour tourner le corps de serrage (7) est une vis (11), en particulier une vis sans tête (12), la vis (11) étant guidée dans un taraudage (13) du boîtier de capteur (1) pour actionner le corps de serrage (7).

5. Boîtier de capteur selon la revendication 4, **caractérisé en ce que** la vis (11) présente à une extrémité des moyens d'actionnement (14) et à l'extrémité opposée une tête sphérique (15) ou un logement de tête sphérique (16), le corps de serrage (7) présentant un logement de tête sphérique (16) correspondant ou une tête sphérique (15) correspondante.

6. Boîtier de capteur selon l'une au moins des revendications précédentes, **caractérisé en ce que** au moins deux corps de serrage (7) sont agencés dans le boîtier de capteur (1), les corps de serrage (7) étant agencés en regard, et les corps de serrage (7) étant chacun mobiles en rotation par l'élément d'actionnement (6).

7. Boîtier de capteur selon l'une au moins des revendications précédentes, **caractérisé en ce que** le corps de serrage (7) est constitué en métal et le corps de serrage (7) est connecté électriquement à un potentiel électrique du capteur (2) ou d'une carte à circuits du capteur (2).

8. Boîtier de capteur selon l'une au moins des revendications précédentes, **caractérisé en ce que** le corps de serrage (7) présente une denture sur le côté extérieur qui pousse contre la paroi de gorge (19) de la gorge de fixation (3).

9. Boîtier de capteur selon l'une au moins des revendications précédentes, **caractérisé en ce que** le corps de serrage (7) comprend des moyens de blocage moyennant quoi le corps de serrage (7) est agencé de façon imperdable dans le boîtier de capteur (1).
